# EUROPÄISCHE PATENTANMELDUNG

(11) **EP 1 073 139 A2**
(43) Veröffentlichungstag der Anmeldung: **31.01.2001**
(21) Anmeldenummer: 00115003.6
(22) Anmeldetag: 21.07.2000
(51) Int. Cl.: H01M 8/04, H01M 8/06

(54) **Wasserversorgungssystem**

(30) Priorität: 28.07.1999 DE 19935746; 30.07.1999 DE 19936984; 08.11.1999 AT 187399
(71) Anmelder: Joh. Vaillant GmbH u. Co., 42859 Remscheid (DE)
(72) Erfinder: Bielski, Martin, 42859 Remscheid (DE); Paulus, Jochen, 42655 Solingen (DE)
(74) Vertreter: Heim, Johann-Ludwig

(57) **Zusammenfassung**

Wasserversorgungs-System für eine Brennstoffzellen-Anordnung (5) mit einer Gasreformierung zur Wasserstofferzeugung, bei welchem eine Wasserreinigungs-Einheit (4) vorgesehen ist, die der Brennstoffzellen-Anordnung (5) vorgeschaltet ist, wobei eine Steuerung (6) vorgesehen ist, die mit der Brennstoffzellen-Anordnung (5) verbunden ist, und die Brennstoffzellen-Anordnung (5) mit einem Wärmetauscher (7) verbunden ist. Um den Wartungsaufwand für die Wasserreinigungs-Einheit (4) zu minimieren, ist vorgesehen, daß der Wasserreinigungs-Einheit ein die elektrische Leitfähigkeit des gereinigten Wassers erfassender Fühler (3a) nachgeschaltet ist, der mit der Steuerung (6) verbunden ist.

## Beschreibung

Die Erfindung bezieht sich auf ein Wasserversorgungs-System gemäß dem Oberbegriff des Anspruches 1.

Beim Betrieb einer Brennstoffzellen-Anordnung mit einer Gasreformierung zur Wasserstofferzeugung ist es notwendig, dem Prozeß Wasser zuzuführen. Dies kann über einen externen Wasseranschluß an das Frischwassernetz und bzw. oder über die Kondensation von Wasser im Abgas eines Brennstoffzellen-Systems erfolgen. Da das Wasser im Brennstoffzellen-System einen sehr hohen Reinheitsgrad aufweisen muß, um Verunreinigungen und Fehlerströme zu vermeiden, muß das Frischwasser vollentsalzt werden und Kondensat, bzw. Umlaufwasser für die Stackkühlung der Brennstoffzellen-Systeme oder Prozeßwasser für den Gasreformer gegebenenfalls nachgereinigt werden.

Zur Entsalzung sind Vollentsalzungs-Patronen erforderlich. Dabei ist die Lebensdauer der Vollentsalzungs-Patronen bei einem bestimmten Wasserdurchfluß abhängig von den Verunreinigungen im Frischwasserbrennstoffzellen-System und der Wassertemperatur. Die Einsatzgrenze liegt bei den heute verwendeten Harzen bei ca. 40°C. Für den Betrieb mit einem Brennstoffzellen-System ergeben sich verschiedene Probleme.

So ist es bei den bekannten Wasserversorgungs-Systemen nicht möglich, das Wartungsintervall für die Entsalzungs-Patronen individuell für die jeweilige Anlage und deren Betriebsbedingungen festzulegen. Außerdem ist es bei den bekannten Anlagen nicht möglich, Umlaufwasser zu reinigen, wenn die Kühltemperatur für das Brennstoffzellen-System über 40°C liegt.

Ziel der Erfindung ist es, diese Nachteile zu vermeiden und ein Wasserversorgungs-System der eingangs erwähnten Art vorzuschlagen, bei dem eine im wesentlichen vollständige Ausnutzung der Entsalzungs-Patronen möglich ist.

Erfindungsgemäß wird dies bei einem Wasserversorgungs-System der eingangs erwähnten Art durch die kennzeichnenden Merkmale des Anspruches 1 erreicht.

Durch die vorgeschlagenen Maßnahmen ist eine ständige Überwachung der elektrischen Leitfähigkeit des gereinigten Wassers sichergestellt, die einen sehr sicheren Hinweis für die Wirksamkeit der Entsalzungs-Patrone darstellt. Dadurch ist es möglich, die Patrone erst dann auszutauschen, wenn deren Wirksamkeit nicht mehr ausreichend ist. Auf diese Weise ist es möglich, einen vorzeitigen Austausch und damit eine Verschwendung von Material zu vermeiden.

Durch die Merkmale des Anspruches 2 ist es möglich, die Differenz der Leitfähigkeit des Wassers vor und nach der Wasserreinigungs-Einheit zu ermitteln, die einen sehr exakten Aussagewert über die Funktionstüchtigkeit der Entsalzungs-Patrone zuläßt.

Durch die Merkmale des Anspruches 3 ist es möglich, das im Wärmetauscher anfallende Kondensat zur Wasserreinigungs-Einheit zurückzuführen. Dabei kann das gesamte anfallende Kondensat der Wasserreinigungs-Einheit zugeführt werden und diesem nur zur Ergänzung Frischwasser zuzusetzen. Falls jedoch das Kondensat die maximal zulässige Temperatur für die Wasserreinigungs-Einheit überschreitet, so kann ein entsprechend höherer Anteil an Frischwasser zugesetzt werden.

Dadurch ist es auch möglich, das Brennstoffzellen-System in beliebiger Weise zu betreiben, ohne daß es dadurch zu Problemen bei der Wasseraufbereitung kommt.

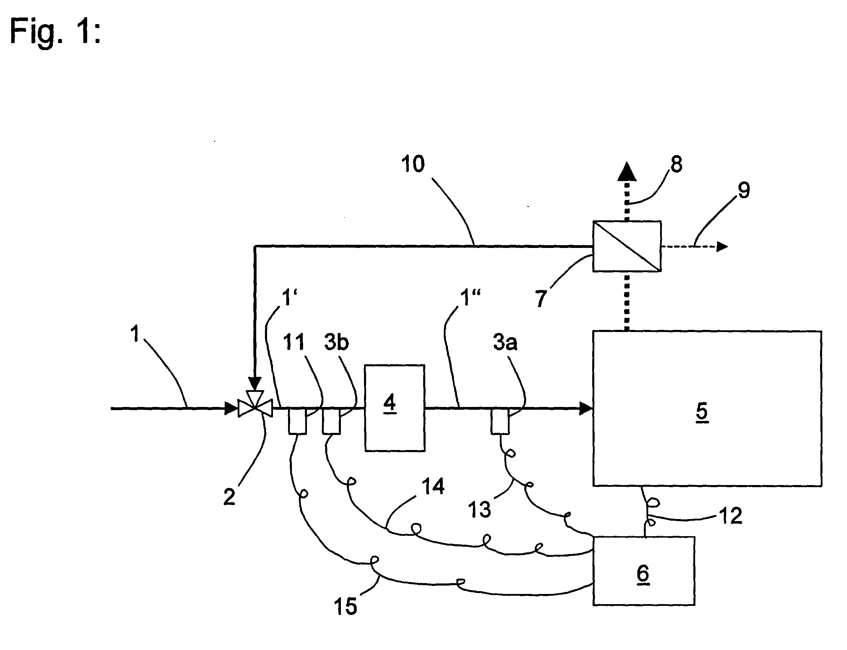

Die Erfindung wird nun anhand der Zeichnung näher erläutert, die schematisch eine erfindungsgemäße Einrichtung zeigt.

Bei dieser Einrichtung ist eine Frischwasserleitung 1 vorgesehen, in der ein Mischer 2 angeordnet ist, an dem eine Kondensatleitung 10 angeschlossen ist.

Die Frischwasserleitung 1, bzw. eine an den Mischer 2 angeschlossene Verbindungsleitung 1' mündet in einer Wasserreinigungs-Einheit 4, in der das zuströmende Wasser aufbereitet wird und in der Entsalzungs-Patronen enthalten sind.

Ausgangsseitig ist die Wasserreinigungs-Einheit 4 über eine Anschlußleitung 1'' mit einem Brennstoffzellen-System 5 verbunden, das eine Gasreformierung umfaßt. Dabei ist das Brennstoffzellen-System 5 über eine Steuerleitung 12 mit einer Steuerung 6 verbunden.

Das Brennstoffzellen-System 5 ist über eine Abgasleitung 8 mit einem Wärmetauscher 7 verbunden, aus dem über eine Leitung 9 z.B. Heizwasser ausgeleitet wird. Weiters führt aus dem Wärmetauscher 7 die Kondensatleitung 10 weg.

Die Steuerung 6 ist über eine Signalleitung 13 mit einem in der Anschlußleitung 1'' angeordneten Fühler 3a zur Erfassung der elektrischen Leitfähigkeit des gereinigten Wassers, sowie über eine Signalleitung 14 mit einem weiteren, in der Verbindungsleitung 1' angeordneten Fühler 3b zur Erfassung der elektrischen Leitfähigkeit des ungereinigten Wassers verbunden. Außerdem ist die Steuerung 6 über eine Signalleitung 15 mit einem in der Verbindungsleitung 1' angeordneten Temperaturfühler 11 verbunden.

Im Betrieb wird dem Brennstoffzellen-System 5 Wasser zur Erzeugung von Wasserstoff zugeführt, wobei das Wasser bestimmten Reinheitsanforderungen genügen muß. Dazu wird das Wasser in der Wasserreinigungs-Einheit 4 gereinigt.

Aus dem aus dem Brennstoffzellen-System 5 austretenden heißen Abgasen wird im Wärmetauscher 7 Wärme entzogen, wobei das anfallende Kondensat über den Mischer 2 der Wasserreinigungs-Einheit 4 zugeführt wird, wobei zumindest das erforderliche Frischwasser 1 zugesetzt wird.

Dabei wird die Temperatur und die elektrische Leitfähigkeit dieses Mischwassers erfaßt und der Steuerung 6 übermittelt. Diese wirkt auf den Mischer 2 in der Weise ein, daß bei Überschreitung der maximalen Arbeitstemperatur der Wasserreinigungs-Einheit 4 der Anteil an Frischwasser erhöht wird.

Weiter wird die elektrische Leitfähigkeit des gereinigten Wassers durch den Fühler 3a erfaßt und in der Steuerung die Differenz der beiden gemessenen Werte der elektrischen Leitfähigkeit ermittelt, die einen sehr eindeutigen Hinweis auf die Funktionsfähigkeit der Wasserreinigungs-Einheit 4 darstellt. Ist die Funktionsfähigkeit der Wasserreinigungs-Einheit 4 nicht mehr gegeben, so zeigt dies die Steuerung 6 an. Dadurch ist es möglich, die Wartung der Wasserreinigungs-Einheit 4 erst dann durchzuführen, wenn dies tatsächlich erforderlich ist.

## Patentansprüche

1. Wasserversorgungs-System für eine Brennstoffzellen-Anordnung (5) mit einer Gasreformierung zur Wasserstofferzeugung, bei welchem eine Wasserreinigungs-Einheit (4) vorgesehen ist, die der Brennstoffzellen-Anordnung (5) vorgeschaltet ist, wobei eine Steuerung (6) vorgesehen ist, die mit der Brennstoffzellen-Anordnung (5) verbunden ist, und die Brennstoffzellen-Anordnung (5) mit einem Wärmetauscher (7) verbunden ist, **dadurch gekennzeichnet**, daß der Wasserreinigungs-Einheit ein die elektrische Leitfähigkeit des gereinigten Wassers erfassender Fühler (3a) nachgeschaltet ist, der mit der Steuerung (6) verbunden ist.

2. Wasserversorgungs-System nach Anspruch 1, **dadurch gekennzeichnet**, daß der Wasserreingigungs-Einheit (4) ein weiterer die elektrische Leitfähigkeit des zuströmenden Roh-Wassers erfassender Fühler (3b) vorgeschaltet ist, der mit der Steuerung (6) verbunden ist.

3. Wasserversorgungs-System nach Anspruch 1 oder 2, **dadurch gekennzeichnet**, daß der Wärmetauscher (7) mit einer Kondensatleitung (10) versehen ist, die über einen Mischer (3) mit einer Frischwasserleitung (1), die in die Wasserreinigungs-Einheit (4) mündet, verbindbar ist.
